# EUROPÄISCHE PATENTSCHRIFT

(11) **EP 1 718 876 B1**
(45) Veröffentlichungstag und Bekanntmachung des Hinweises auf die Patenterteilung: **31.10.2012**
(21) Anmeldenummer: 05707767.9
(22) Anmeldetag: 13.01.2005
(51) Int. Cl.: F16B 25/00

(54) **GEWINDEFORMENDE SCHRAUBE**
THREAD-FORMING SCREW
VIS AUTOTARAUDEUSE

(30) Priorität: 25.02.2004 DE 202004002878 U
(43) Veröffentlichungstag der Anmeldung: 08.11.2006
(73) Patentinhaber: A-Z Ausrüstung und Zubehör GmbH & Co. KG, 45525 Hattingen (DE)
(72) Erfinder: DICKE, Robert, 58256 Ennepetal (DE)
(74) Vertreter: Solf, Alexander
(86) Internationale Anmeldenummer: PCT/EP2005/050135
(87) Internationale Veröffentlichungsnummer: WO 2005/080801

(56) Entgegenhaltungen:
- EP-A- 0 893 611
- EP-B- 0 394 719
- DE-A- 3 335 092
- DE-U- 8 409 108

## Beschreibung

Die vorliegende Erfindung betrifft eine Schraube mit einem Gewindeschaft mit einem Kraftangriff zur Drehmomentübertragung und einer Schraubenspitze, wobei der Gewindeschaft aus einem Schaftkern und einem selbst-gewindeformenden Gewinde besteht und das Gewinde als schraubenlinienförmig über den Schaftkern verlaufende, von zwei in einer äußeren Gewindekante zusammenlaufenden Flanken begrenzte Erhebung mit einer radial zwischen dem Schaftkern und der Gewindekante gemessenen Höhe ausgebildet ist, wobei das Gewinde im Profil gesehen an der Gewindekante einen bestimmten, zwischen den Flanken gebildeten Spitzenwinkel aufweist.

Eine solche Schraube ist in der DE 33 35 092 A1 beschrieben. Sie hat sich in der Praxis sehr gut bewährt, weil ein hohes Lösemoment bei geringem Eindrehmoment erreicht wird. Bei dieser bekannten Schraube verläuft zumindest in einem Teilbereich des Gewindes die äußere Gewindekante in radialer Richtung mit einer bestimmten Amplitude wellenförmig zwischen Wellenbergen mit der Gewinde-Höhe und Wellentälem mit einer um die Amplitude reduzierten Höhe. Dabei weist das Gewinde zumindest im Bereich einer seiner Flanken im Bereich der Wellentäler der Gewindekante die Oberfläche der Flanke unterbrechende Einbuchtungen auf, deren äußere Begrenzung die Gewindekante ist. In den nicht von Einbuchtungen unterbrochenen Bereichen der Wellenberge der Gewindekante ist der bestimmte, erste Spitzenwinkel zwischen den geradlinig zwischen dem auf dem Kem liegenden Gewindefußpunkt und der Gewindekante verlaufenden Flanken gebildet, während sich in den tiefsten Bereichen der Wellentäler ein zweiter, größerer Spitzenwinkel ergibt. Das Gewinde verläuft bis zum Ende der Schraubenspitze, wobei es ausgehend von der Schraubenspitze mindestens über den ersten sich anschließenden Gewindegang mit den Einbuchtungen und der wellenförmigen Gewindekante ausgeführt ist. Dadurch wirkt die Spitze als eine Art reibendes Werkzeug, wobei die Gewindeformung unmittelbar an der Spitze der Schraube erfolgt, so dass sich ein sicheres Zentrieren und Angreifen im Werkstück unmittelbar beim Ansetzen der Schraube ergibt. Bei dieser bekannten Schraube sind die Einbuchtungen symmetrisch zur Mittellinie der wellenförmigen Gewindekante als symmetrische Paraboloide geformt.

Die EP 0 394 719 B1 beschreibt eine ähnliche gewindeformende Schraube, bei der aber Einbuchtungen auf den Flanken derart asymmetrisch ausgebildet sind, dass ihre in Eindrehrichtung vorderen Flankenflächen steiler verlaufen als die in Eindrehrichtung hinteren Flankenflächen. Dadurch wird eine weitere Minderung des Eindrehmoments bei gleichzeitiger Erhöhung des Lösemoments erreicht. Beim Einschrauben ist der Widerstand durch die flachere Ausführung der in Eindrehrichtung hinteren Parabolteile geringer, wohingegen das Lösen der Schraube aufgrund der steileren Anordnung der in Eindrehrichtung vorne liegenden Parabolflächen erschwert wird.

Das Dokument DE 84 09 108 U beschreibt eine Schraube mit einem durchgehend konstanten Gewindeprofil mit Flanken mit zwei radial benachbarten Abschnitten, die in radialer Richtung jeweils geradlinig verlaufen. Dabei soll im radial inneren, dem Schraubenkern nahen Bereich ein steilerer Flankenwinkel als im radial äußeren, dem Schraubenkem fernen Bereich des Gewindes vorhanden sein. Dieses spezielle Gewinde wird in dem Dokument auch "geteiltes Gewinde" genannt.

Das Dokument EP 0 893 611 A1 beschreibt einen Mauerwerksanker in Form einer selbstschneidenden Schraube, die ebenfalls ein Gewinde mit einem über seinen Verlauf hinweg durchgehend konstanten Profil aufweist. Weiterhin ist das Gewinde mit einer hyperbolischen Profilform mit zwei Gewindeflanken ausgebildet, die über den gesamten Gewindeverlauf hinweg in radialer Richtung konkav gekrümmt sind. Dabei verlaufen die Flanken ausgehend vom Schaftkern mit einem stetigen Übergang mit einer hyperbolischen Kurvenform durchgehend gekrümmt bis zur äußeren Gewindekante. Dadurch soll eine ausgeprägt breitere Gewindebasis erreicht werden. Deshalb ist diese Schraube, die speziell zum Eindrehen in vorgebohrte Löcher in harten Beton konzipiert ist, nicht geeignet, ohne Vorbohren, selbstlochend in ein Material eingeschraubt zu werden, weil dabei auch die ausgeprägt breitere Gewindebasis in das Material eindringen müsste.

Der vorliegenden Erfindung liegt die Aufgabe zugrunde, eine eingangs beschriebene Schraube so zu verbessern, dass das Eindrehmoment noch weiter reduziert wird. Dabei soll die Schraube mit optimierten Eigenschaften universell zum Einschrauben in verschiedene Materialien oder speziell einerseits zum Einschrauben in weichere Materialien, wie Holz und dergleichen, insbesondere ohne Vorbohren und somit selbstlochend, bzw. andererseits zum Einschrauben in härtere Materialien, z. B. Kunststoffe und Metalle, insbesondere in ein Kernloch, konzipiert sein.

Erfindungsgemäß wird dies durch die Merkmale des unabhängigen Anspruchs 1 erreicht. Vorteilhafte Ausgestaltungen sind in den abhängigen Ansprüchen enthalten.

Wenigstens eine der beiden Flanken des Gewindes ist im Bereich zwischen dem Schaftkern und der Gewindekante im radialen Profil gesehen derart konkav ausgebildet, dass der Spitzenwinkel kleiner als ein zwischen gedachten, jeweils durch einen Gewindefußpunkt und die Gewindekante bestimmten Flankengeraden eingeschlossener Flankenwinkel ist und wobei die/jede Flanke ausgehend vom Schaftkern zunächst geradlinig entsprechend der durch den Gewindefuβpunket verlanfenden Flanken geraden und erst ab einer bestinimten Flanken höhe konkav verlänft . Somit ist der Spitzenwinkel klein, woraus ein schlankeres Gewindeprofil resultiert, so dass das Furchmoment beim Einschrauben günstig beeinflußt wird, indem das Gewinde leichter unter Materialverdrängung, d. h. im Wesentlichen ohne Spanbildung, ein Gegengewinde in dem jeweiligen Material bildet. Durch das erfindungsgemäße Gewindeprofil ist aber trotz der Schlankheit eine gute mechanische Festigkeit gewährleistet, weil der Gewindefuß unverändert breit bzw. schmal ausgeführt ist.

In vorteilhafter Ausgestaltung der Erfindung kann das Gewinde (entsprechend dem oben genannten Stand der Technik) mit wellenförmiger Gewindekante und Einbuchtungen auf mindestens einer Flanke ausgebildet sein, wobei auch im Bereich der Wellentäler ein schlankerer, zweiter Spitzenwinkel gebildet ist Dabei sollte eine Winkeldifferenz zwischen dem ersten und zweiten Spitzenwinkel möglichst klein oder sogar Null sein, d. h. auch der zweite Spitzenwinkel im Bereich der Wellentäler und der Einbuchtungen sollte möglichst klein sein, um durch eine schlanke Profilform das Furchmoment klein zu halten. Vorteilhaft ist hierbei auch ein stetiger, praktisch kantenfreier Übergang zwischen den Gewindeflanken und den Einbuchtungen.

Zusätzlich oder aber alternativ dazu ist vorgesehen, die Größe der Amplitude der wellenförmigen Gewindekante in Abhängigkeit von verschiedenen Verwendungszwecken der Schraube zu variieren. Für eine Verwendung zum Einschrauben in weichere Materialien, wie Holz oder andere Faserstoffe und Verbundwerkstoffe, beträgt die Amplitude der wellenförmigen Gewindekante etwa das 0,2- bis 0,4-fache der Gewinde-Höhe. Je weicher bzw. nachgiebiger das Material ist, desto größer kann die Amplitude sein (und umgekehrt).Für eine Verwendung zum Einschrauben in härtere Materialien, insbesondere Kunststoffe oder Metalle, ist vorgesehen, dass die Amplitude der Gewindekante etwa das 0,05 bis 0,15-fache der Gewinde-Höhe beträgt. Je härter und widerstandsfähiger das Material ist, desto kleiner sollte die Amplitude sein (und umgekehrt). Weiterhin kann für eine Verwendung als "Universal-Schrauben" die Amplitude auch etwa das 0,1 bis 0,3-fache der Gewinde-Höhe betragen.

Eine weitere vorteilhafte Maßnahme betrifft die radial gemessene Tiefe der Einbuchtungen. Für eine Verwendung zum Einschrauben in weichere Materialien ergibt sich diese Tiefe aus der Gewinde-Höhe multipliziert mit einem Faktor größer/gleich 0,8. Dieser Faktor kann mit Vorteil etwa 0,8 betragen, aber auch gegen 1,0 gehen. Für härtere Materialien beträgt die radiale Tiefe der Einbuchtungen vorzugsweise etwa das 0,2 bis 0,3-fache der Gewinde-Höhe. Für eine universelle Verwendung kann die Tiefe auch etwa das 0,3 bis 0,8-fache der Gewinde-Höhe betragen.

Einen weiteren Einfluß auf die Schraubeneigenschaften hat auch die Anzahl von Wellenbergen und Wellentälern pro Gewindegang, d. h. der Umfangswinketabstand bzw. Teilungswinkel der Wellenberge. Für eine Verwendung zum Einschrauben in weichere Materialien sollte der Teilungswinkel im Bereich von 30° bis 45° liegen, woraus eine Anzahl n von 8 bis 12 Wellenbergen bzw. Wellentälern pro Gewindegang (360°) resultiert. Für eine Verwendung bei härteren Materialien liegt der Teilungswinkel im Bereich von 15° bis 24°, woraus sich eine Anzahl n von 15 bis 24 Wellenbergen bzw. - tälern ergibt Für eine Auslegung als "Universal-Schraube" kann der Teilungswinkel im Bereich von 20° bis 35° liegen (n=10 bis 18).

Insbesondere in Verbindung mit einem oder mehreren der erläuterten Merkmale ist es vorteilhaft, wenn das konkret eingängig ausgeführte Gewinde eine Steigung aufweist, die etwa das 0,5-fache des äußeren Gewindedurchmessers (Schrauben-Nenndurchmesser) beträgt Hierdurch wird ein vergrößerter Vorschub zum schnelleren Einschrauben erreicht. Dennoch ist ein hohes Lösemoment zur dauerhaften Verschraubungs-Vorspannung gewährleistet.

Anhand von mehreren, in der Zeichnung veranschaulichten Ausführungsbeispielen soll die Erfindung genauer erläutert werden. Dabei zeigen:
- Fig. 1: eine stark vergrößerte, leicht perspektivische Seitenansicht einer erfindungsgemäßen Schraube in einer ersten Ausführungsform.
- Fig. 2: eine weiter vergrößerte Ansicht des Gewindeprofils in der radialen Schnittebene II-II gemäß Fig. 1, jedoch in einer nicht erfindungs-gemäβen Ausführung,
- Fig. 3: eine schematische Perspektivansicht eines Abschnittes des Gewindes in der nicht erfindungsgemäβen Ausführung gemäß Fig. 2,
- Fig. 4: eine Ansicht des Profils analog zu Fig. 2 in einer erfindungsgemäβen Ausführung
- Fig. 5: eine Ansicht wie in Fig. 3 zur der erfindungsgemäβen Ausführung gemäß Fig. 4,
- Fig. 6: eine stark vergrößerte, leicht perspektivische Seitenansicht einer erfindungsgemäßen Schraube in einer vorteilhaften Ausgestaltung,
- Fig. 7: einen weiter vergrößerten Querschnitt in der Ebene VII - VII gemäß Fig. 6, und zwar in einer beispielhaften Ausführungsform insbesondere zur Verwendung bei weicheren Materialien,
- Fig. 8: eine vergrößerte Ansicht des Gewindeprofils, d. h. einen Querschnitt durch das Gewinde im Bereich eines Wellentales in der Ebene VIII- VIII gemäß Fig. 7, in einer nicht erfindungsgemäβen ausführung,
- Fig. 9: eine Darstellung des Gewindes analog zu Fig. 3 bzw. 5 ähnlich zu der Ausführung gemäß Fig. 8,
- Fig. 10: eine Darstellung analog zu Fig. 8 in einer erfindungsgemäβen. Ausführung
- Fig. 11: eine Darstellung des Gewindes wie in Fig. 9 zu der erfindungsgemäβen Ausführung gemäß Fig. 10,
- Fig.12: eine Darstellung analog zu Fig. 7 einer weiteren Ausführung insbesondere für weichere Materialien,
- Fig. 13: eine weitere Ausführung ebenfalls bevorzugt für weichere Materialien in einer Darstellung analog zu Fig. 7 bzw. 12, jedoch mit asymmetrischen Einbuchtungen,
- Fig. 14: eine zur Verwendung insbesondere bei härteren Materialien konzipierte Ausführungsform in einer Darstellung analog zu u.a. Fig. 7 mit symmetrischen Einbuchtungen und
- Fig. 15: eine Ausführung analog zu Fig. 14, jedoch mit asymmetrischen Einbuchtungen.

In den verschiedenen Figuren der Zeichnung sind gleiche Teile stets mit den gleichen Bezugszeichen versehen und werden daher in der Regel auch jeweils nur einmal beschrieben.

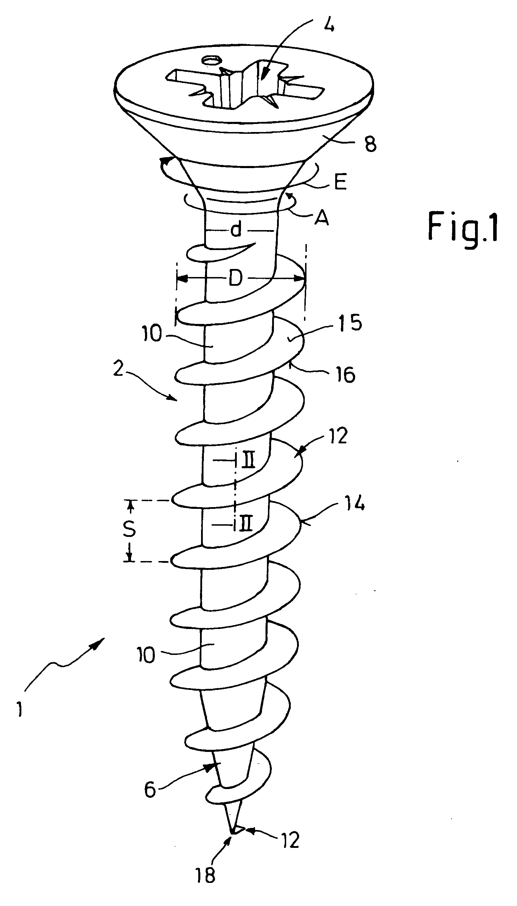

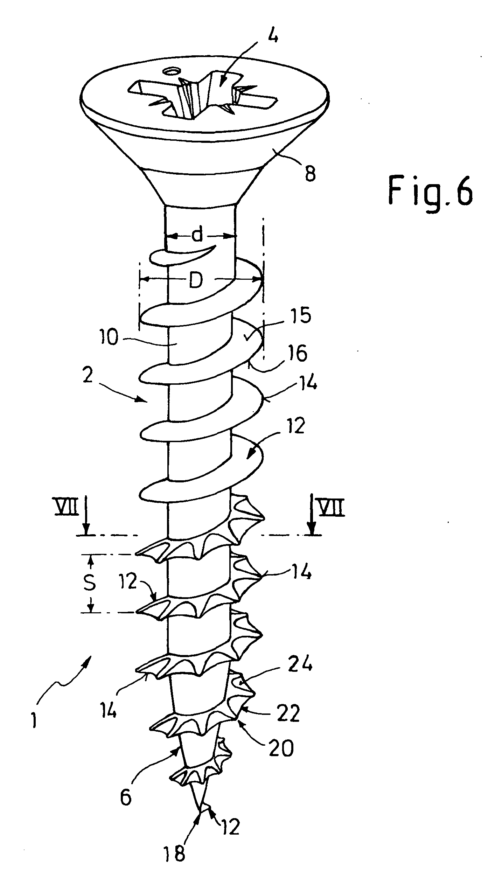

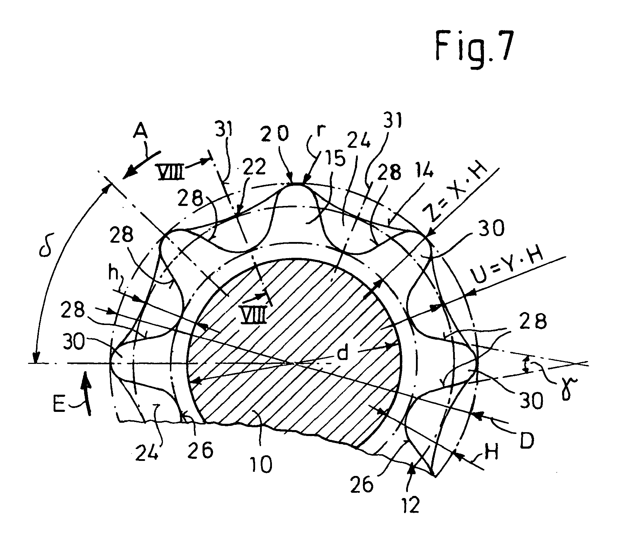

Wie sich zunächst aus Fig. 1 und 6 ergibt, besteht eine erfindungsgemäße Schraube 1 aus einem Gewindeschaft 2 mit einem einendigen Kraftangriff 4 zur Drehmomentüberbagung und einer gegenüberiegenden Schraubenspitze 6. Im dargestellten Beispiel ist der Kraftangriff 4 in Form einer Vertiefung als Innenkraftangriff - hier rein beispielhaft als Kreuzschlitz - in einem als Senkkopf ausgebildeten Schraubenkopf 8 ausgebildet. Der Gewindeschaft 2 besteht aus einem vorzugsweise zylindrischen Schaftkern 10 mit einem Kerndurchmesser d (siehe auch Fig. 7) und einem selbst-gewindeformenden, insbesondere eingängigen Gewinde 12 mit einem äußeren Gewindedurchmesser (Schrauben-Nenndurchmesser) D (Fig. 1, 6 und 7), wobei dieses Gewinde 12 als eine (nur eine) schraubenlinienförmig zumindest über einen Teil des Schaftkems 10 und über die Schraubenspitze 6 verlaufende Erhebung ausgebildet ist, die von zwei in einer äußeren Gewindekante 14 zusammenlaufenden Flanken 15, 16 begrenzt ist. Das Gewinde 12 verläuft hierbei jedenfalls bis zum vorderen, spitzen Ende 18 der Schraubenspitze 6. Im dargestellten Beispiel verläuft es über den gesamten Schaftkern 10 hinweg nahezu bis zum Schraubenkopf 8 (sogenanntes Vollgewinde). Die Schraube 1 kann aber auch mit Teilgewinde, d. h. mit einem gewindefreien Schaftabschnitt im Anschluß an den Schraubenkopf 8 ausgebildet sein. Üblicherweise ist das Gewinde 12 als Rechtsgewinde ausgebildet, so dass eine Einschraubrichtung (Pfeile E) dem Uhrzeigersinn entspricht. Die entgegengesetzte Ausschraubrichtung ist mit Pfeilen A eingezeichnet. Im Bereich der Schraubenspitze 6 verjüngt sich der Kern 10 etwa konisch vom Kerndurchmesser d bis zum spitzen Ende 18.

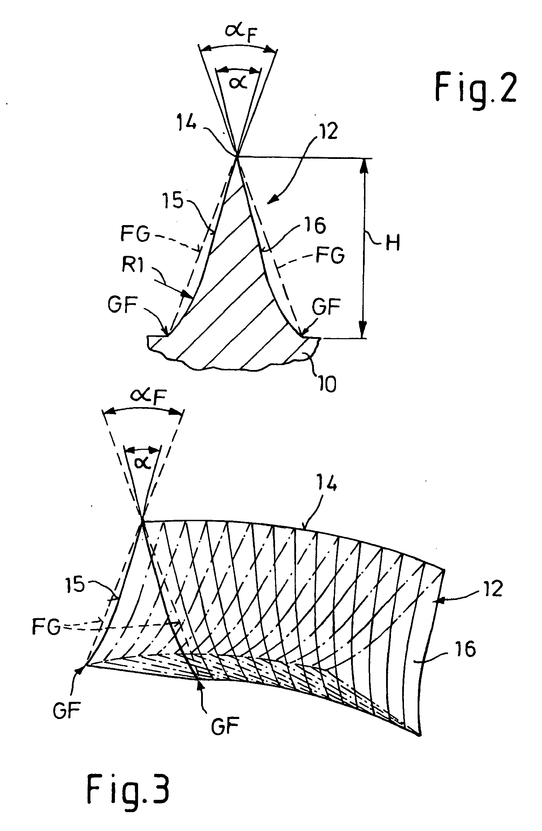

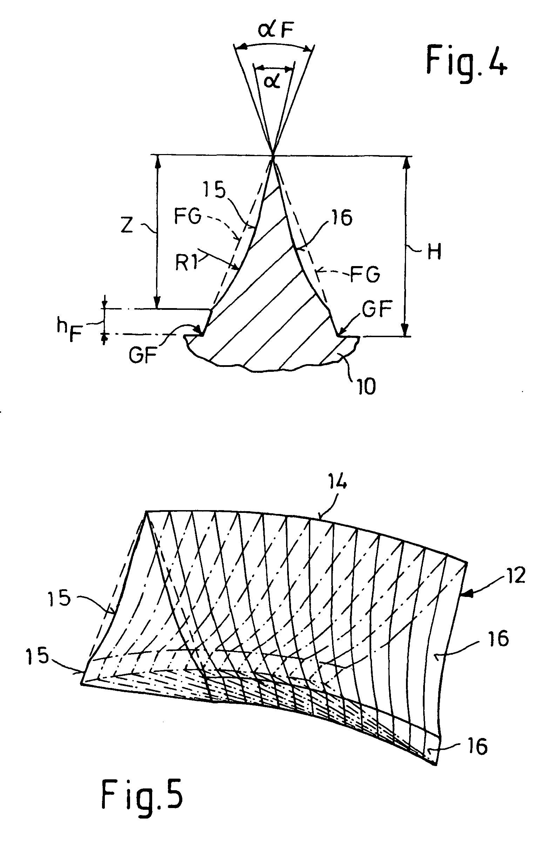

Wie sich insbesondere aus den Fig. 2 bis 5 ergibt, weist das Gewinde 12 eine radial vom Schaftkern 10 bis zur Gewindekante 14 gemessene Höhe H auf. Ferner weist das Gewinde 12 im Profil gesehen (siehe insbesondere Fig. 2 und 4) an der Gewindekante 14 einen bestimmten, zwischen den angrenzenden Flanken 15, 16 gebildeten Spitzenwinkel α auf.

Erfindungsgemäß ist hierbei vorgesehen, dass wenigstens eine der beiden Flanken 15,16 des Gewindes 12 im Bereich zwischen dem Schaftkern 10 und der Gewindekante 14 im Profil bzw. radialen Querschnitt gesehen derart konkav ausgebildet ist, dass der sich im Bereich der Gewindekante 14 durch die angrenzenden Flanken 15, 16 gebildete Spitzenwinkel α jedenfalls kleiner ist als ein sogenannter Flankenwinkel α_{F}, der zwischen gedachten, jeweils durch einen Gewindefußpunkt GF und die Gewindekante 14 verlaufenden Flankengeraden FG definiert ist.

In den bevorzugten Ausführungsbeispielen sind beide Flanken 15 und 16 entsprechend konkav ausgebildet, und zwar vorzugsweise gleichartig, d. h. zu einer Profilmittelebene symmetrisch.

Bei der nicht erfindungsgemäβen Ausführungsform gemäß Fig. 2 und 3 verläuft jede Flanke 15, 16 ausgehend vom Schaftkern 10 bzw. vom Gewindefußpunkt GF zumindest über einen Teil der radialen Höhe H konkav gekrümmt. Dies ist in Fig. 2 durch einen Krümmungsradius R1 veranschaulicht, wobei aber anstatt einer Kreisbogenform auch jede andere, z. B. parabelartige Kurvenform möglich ist. Somit umfaßt der Begriff "konkav" beliebige Kurvenformen, d. h. neben stetigen gekrümmten Kurven auch unstetige Kurven, die aus gekrümmten und/oder geradlinigen Abschnitten bestehen, die jeweils über stumpfe Winkel ineinander übergehen. Wesentlich ist nur, dass hierdurch sich der Winkel α gegenüber dem Flankenwinkel α_{F} reduziert.

Bei der erfindungsgemäβen gemäß Fig. 4 und 5 verläuft jede Flanke 15, 16 ausgehend vom Schaftkern 10 bzw. vom Gewindefußpunkt GF zunächst entsprechend der gedachten Flankengerade FG geradlinig und erst ab einer bestimmten Flankenhöhe h_{F} konkav. Der konkave Abschnitt jeder Flanke 15, 16 erstreckt sich dann über die restliche Höhe Z (Z=H - h_{F}).

In beiden Ausführungen können die Flanken 15, 16 in einem an die Gewindekante 14 angrenzenden, äußeren Teilbereich im Profil gesehen im Wesentlichen nahezu geradlinig auslaufen.

Vorzugsweise liegt der gegenüber dem Flankenwinkel α_{F} reduzierte Spitzenwinkel α etwa im Bereich von 25° bis maximal 35°.

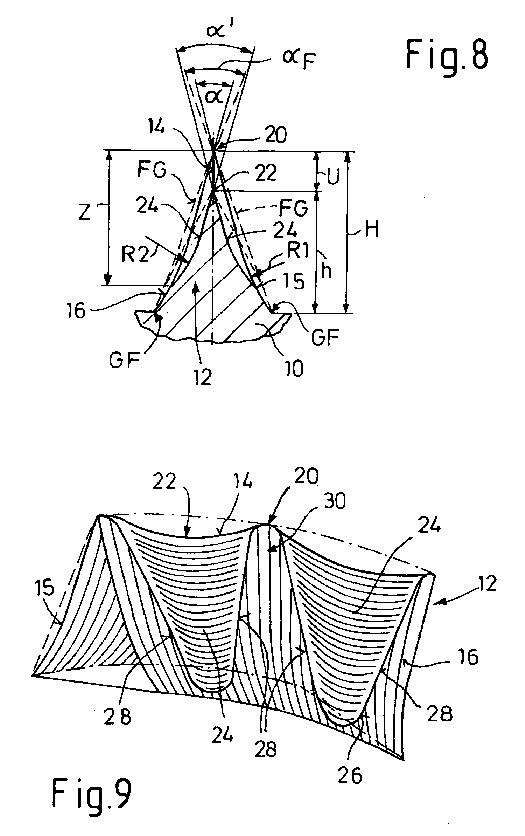

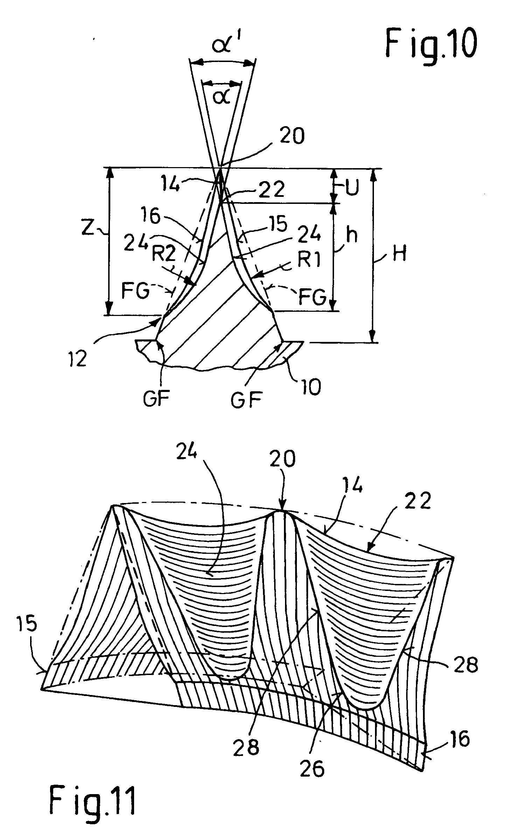

Wie sich aus den Figuren 6 bis 15 ergibt, verläuft in bevorzugter Ausgestaltung der Erfindung die äußere Gewindekante 14 - zumindest in einem Teilbereich des Gewindes 12 - in radialer Richtung mit einer bestimmten Amplitude U wellenförmig zwischen Wellenbergen 20 und Wellentälern 22. Im Bereich der Wellenberge 20 weist das Gewinde 12 die radial zwischen dem Schaftkern 10 und der Gewindekante 14 gemessene Höhe H auf. Diese Höhe H ist im Bereich der Wellentäler 22 um die Amplitude U auf eine Höhe h reduziert. Daraus folgt: U = H - h. Das Gewinde 12 weist zumindest im Bereich einer der Flanken 15, 16, und zwar insbesondere zumindest im Bereich der der Schraubenspitze 6 bzw. 18 zugekehrten Flanke 16, im Bereich der Wellentäler 22 der Gewindekante 14 Einbuchtungen 24 auf, die die Oberfläche der jeweiligen Flanke 15, 16 unterbrechen, und deren äußere radiale Begrenzung die Gewindekante 14 ist. Diese Einbuchtungen 24 weisen Oberflächen auf, die in radialen Richtungen insbesondere konkav (siehe Fig. 8 und 10) sowie in Umfangs- bzw. Drehrichtung der Schraube ebenfalls konkav gewölbt verlaufen. Insbesondere den Fig. 8 bis 11 ist weiterhin zu entnehmen, dass das Gewinde 12 in den nicht von Einbuchtungen 24 unterbrochenen Bereichen der Wellenberge 20 der Gewindekante 14 jeweils den bestimmten, zwischen den in radialer Richtung konkav verlaufenden Flanken 15, 16 gebildeten, ersten Spitzenwinkel α und in den tiefsten Bereichen der Wellentäler 22 der Gewindekante 14 im Bereich der Einbuchtungen 24 einen zweiten Spitzenwinkel α' aufweist.

Bei einer nicht dargestellten Ausführungsart können die Oberflächen der Einbuchtungen 24 in radialer Richtung gesehen im Wesentlichen geradlinig verlaufen. Daraus würde sich ergeben, dass der zweite Spitzenwinkel α' jedenfalls größer als der erste Spitzenwinkel α ist; der zweite Spitzenwinkel α' sollte dann etwa 30° bis maximal 58° betragen, dabei aber im Interesse eines geringen Furchmomentes möglichst klein sein.

Bei den dargestellten vorteilhaften Ausführungsformen sind aber die Oberflächen der Einbuchtungen 24 in radialer Richtung jeweils zumindest über einen Teil ihrer radialen Erstreckung konkav, was in Fig. 8 und 10 beispielhaft mit einem Krümmungsradius R2 angedeutet ist. Es muss sich aber auch hier nicht um eine Kreisbogenkrümmung handeln, sondern es sind beliebige, z. B. parabelförmige oder aus mehreren geradlinigen Abschnitten bestehende Kurvenformen möglich. Diese Ausführung hat den Vorteil, dass der sich im Wellental 22 an der Gewindekante 14 effektiv zwischen angelegten Tangenten ergebende zweite Spitzenwinkel α' durch geeignete Krümmungsform noch deutlich reduziert werden kann. Gemäß Fig. 8 und 10 sind α und α' etwa gleich groß; sie können beispielsweise beide in der Größenordnung von vorzugsweise 25° bis 35° liegen.

Ein weiterer berorzugter Aspekt ist die Größe der Amplitude U der wellenförmigen Gewindekante 14. Für eine Auslegung der Schraube 1 für eine Verwendung zum Einschrauben in weichere Materialien, wie Holz oder dergleichen, sollte die Amplitude U etwa das 0,2- bis 0,4- fache der Gewinde-Höhe H betragen. Mathematisch kann dies durch die Beziehung U = Y · H ausgedrückt werden mit Y = 0,2 bis 0,4. Hierzu wird auf die in Fig. 7, 12 und 13 veranschaulichten Ausführungen verwiesen.

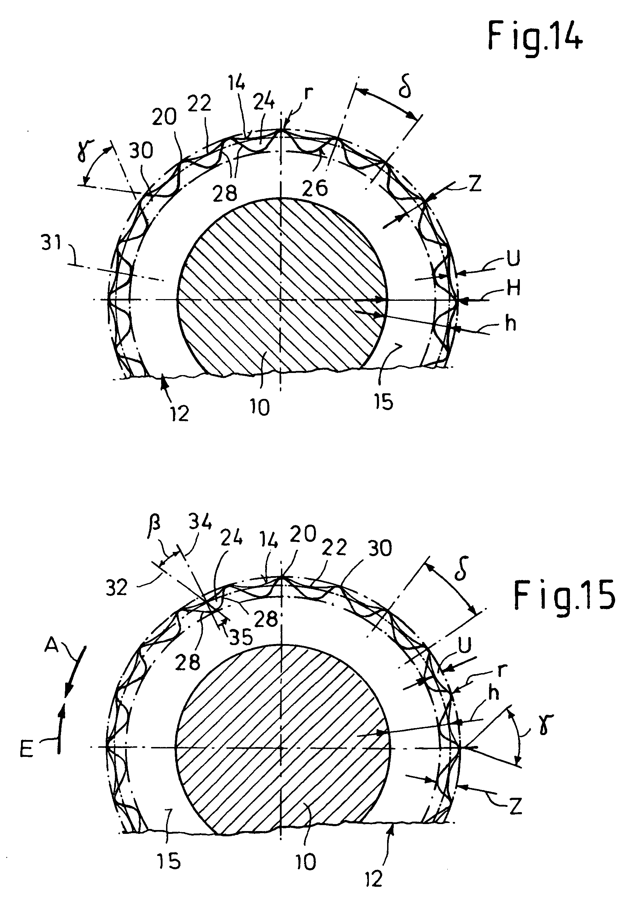

Dem gegenüber beträgt die Amplitude U für eine Verwendung der Schraube 1 zum Einschrauben in härtere und widerstandsfähigere Materialien, insbesondere Kunststoffe oder Metalle, etwa das 0,05- bis 0,15- fache der Höhe H, d. h. in der genannten Beziehung U = Y · H beträgt Y = 0,05 bis 0,15. Dazu wird auf die Ausführungen gemäß Fig. 14 und 15 verwiesen.

In einer nicht dargestellten Ausführung der Schraube 1 für eine universelle Anwendung bei verschiedenartigen Materialien kann die Amplitude U der Gewindekante 14 etwa das 0,1 bis 0,3-fache der Gewinde-Höhe H betragen.

Wie sich weiter aus den Zeichnungsfiguren, insbesondere Fig. 7, 8 und 10 ergibt, weisen die Einbuchtungen 24 jeweils eine ausgehend von dem von den Wellenbergen 20 der Gewindekante 14 bestimmten Gewinde-Durchmesser D in radialer Richtung nach innen gemessene Tiefe Z auf, die jedenfalls zumindest geringfügig kleiner als die Höhe H des Gewindes 12 ist. Dadurch weist das Gewinde 12 in dem Bereich seines Gewindefusses über eine bestimmte Höhe H-Z hinweg ununterbrochene Flanken 15, 16 auf.

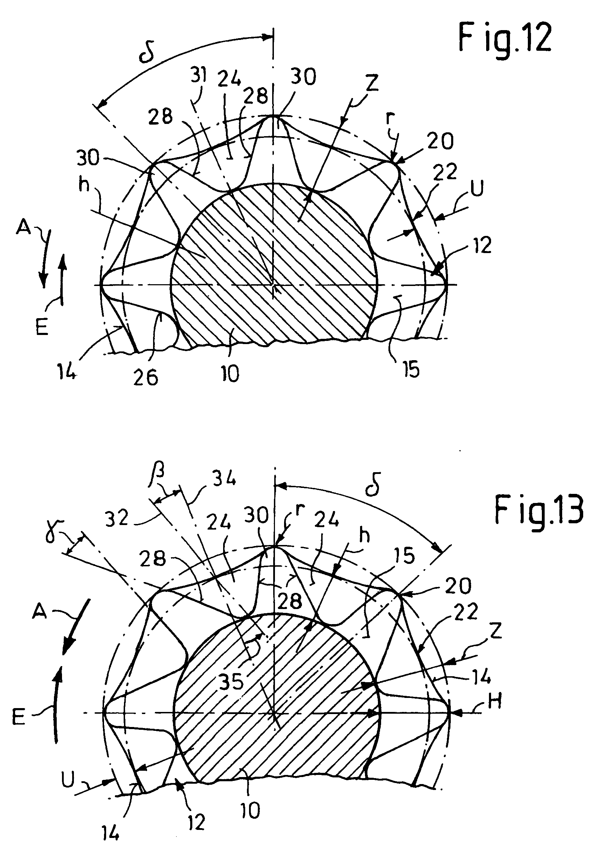

In weiter hevorzugter Ausgestaltung wird diese Tiefe Z der Einbuchtungen 24 ebenfalls in Anpassung an die Verwendung der Schraube 1 ausgelegt. Für weichere Materialien soll die Tiefe Z der Einbuchtungen 24 mindestens das 0,8- fache der Gewinde-Höhe H betragen; es gilt Z = X · H mit X ≥ 0,8. Dabei kann auch Z gegen H gehen, vgl. die Ausführungen gemäß Fig. 12 und 13.

Bei Ausführungen für härtere Materialien, vergleiche Fig. 14 und 15, beträgt in der genannten Beziehung Z=X · H der Faktor X etwa 0,2 bis 0,3.

Für eine universelle Verwendung bei verschiedenen Materialien kann die radiale Tiefe Z der Einbuchtungen 24 auch etwa das 0,3 bis 0,8-fache der Gewinde-Höhe H betragen.

Noch ein weiterer vorteilhafter Aspekt bezieht sich auf die Anzahl von Wellenbergen 20 bzw. Wellentälern 22 pro Gewindegang von 360°. Die Wellenberge 20 (entsprechend natürlich auch die Wellentäler 22) sind in Umfangsrichtung jeweils um einen Teilungswinkel ö voneinander beabstandet. Hierbei ist nun vorzugsweise vorgesehen, dass für eine Verwendung für weichere Materialien der Teilungswinkel δ im Bereich von 30° bis 45° liegt. Nach der Beziehung n = 360°/ δ ergibt sich für die Anzahl von Wellenbergen bzw. Welläntälern n = 8 bis 12 für weichere Materialien. Für eine Auslegung der Schraube 1 zur Verwendung bei härteren Materialien liegt der Teilungswinkel δ im Bereich von 15° bis 24°, so dass eine Anzahl n von 15 bis 24 Wellenbergen 20 bzw. Wellentälern 22 pro Gewindegang vorhanden ist. Für eine universelle Verwendung der Schraube 1 kann eine Ausführung vorgesehen sein, bei der der Teilungswinkel δ etwa im Bereich von 20° bis 35° liegt. Daraus würde eine Anzahl n von etwa 10 bis 18 Wellenbergen 20 bzw. Wellentälern 22 pro Gewindegang resultieren.

Die Einbuchtungen 24 sind jeweils durch eine Grenzlinie 26 von der angrenzenden Fläche der jeweiligen Flanke 15, 16 abgegrenzt. Dabei hat diese Grenzlinie 26 im Wesentlichen die Form einer Parabel mit seitlichen, etwa V-förmigen Grenzabschnitten 28. Durch diese Kontur ist im Bereich der Wellenberge 20 jeweils zwischen zwei benachbarten Einbuchtungen 24 ein Gewindeabschnitt 30 mit vollständigen Flanken 15, 16 gebildet. Die beidseitig eines jede solchen vollständigen Gewindeabschnittes 30 liegenden Grenzabschnitte 28 der benachbarten Einbuchtungen 24 schließen hierbei einen Winkel 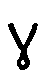 ein, der im Bereich von 30° bis 90° liegen sollte, wobei die Grenzabschnitte 28 im Bereich jedes Wellenberges 20 über eine Verrundung mit einem Radius r = (0,1 bis 0,3) ● H ineinander übergehen.

Bei den Ausführungen gemäß Fig. 7, 12 und 14 sind die Einbuchtungen 24 jeweils derart symmetrisch ausgebildet, dass ihre seitlichen Grenzabschnitte 28 in Eindrehrichtung E und Ausdrehrichtung A der Schraube jeweils im gleichen Winkel zu einer radialen Achse 31 der Einbuchtung 24 verlaufen.

Dem gegenüber ist bei den Ausführungen gemäß Fig. 13 und 15 vorgesehen, dass jede Einbuchtung 24 derart asymmetrisch ausgebildet ist, dass die in Eindrehrichtung E vordere Grenzlinie 28 steiler als die hintere Grenzlinie 28 verläuft, wobei eine Achse 32 der Einbuchtung 24 zu einer radialen Mittellinie 34 des Wellentales 22 der Gewindekante 14 um einen spitzen Winkel β in Eindrehrichtung E versetzt ist (siehe dazu den in Fig. 13 und 15 jeweils eingezeichneten Pfeil 35). Der Winkel β sollte etwa im Bereich von 10° bis 25° liegen.

In vorteilhafter Ausgestaltung der erfindungsgemäßen Schraube 1 ist das gemäß Fig. 6 bis zum Ende 18 der Schraubenspitze 6 verlaufende Gewinde 12 ausgehend vom Ende 18 und über die Schraubenspitze 6 hinweg sowie mindestens über den ersten sich im Bereich des zylindrischen Kerns 10 anschließenden Gewindegang mit den Einbuchtungen 24 und der wellenförmigen Gewindekante 14 ausgeführt. Weiterhin sind bevorzugt auf beiden Flanken 15 und 16 des Gewindes 12 einander axial gegenüberliegend die Einbuchtungen 24 ausgebildet. Im Bereich der Schraubenspitze 6 zu deren Ende 18 hin kann der Abstand der Einbuchtungen 24 bzw. der vollständigen Gewindeabschnitte 30 sukzessive immer kleiner werden.

Wie sich noch aus Fig. 1 und 6 ergibt, ist das Gewinde 12 bevorzugt als konkret eingängiges Gewinde mit einer Steigung S ausgeführt, die aufgrund der erfindungsgemäßen Merkmale mit mindestens etwa dem 0,5-fachen des GewindeDurchmessers D relativ groß sein kann. Es ist weiterhin vorteilhaft, wenn die Schraubenspitze 6 als "vorlochende Spitze" ausgebildet ist. Dies wird in gewissem Umfang insbesondere bei der Ausführung gemäß Fig. 6 bis 15 bereits allein durch die beschriebene Ausgestaltung des bis zum spitzen Ende 18 verlaufenden Gewindes 12 erreicht, da hierdurch die Spitze 6 bei Rotation als eine Art reibendes Werkzeug wirkt. Zusätzlich kann der Kern der Spitze 6 beispielsweise nicht dargestellte, z. B. axiale, rippenförmige Fräselemente (Fräsrippen) aufweisen.

Abschließend sei bemerkt, dass sich in der Praxis insbesondere fertigungsbedingte Abweichungen von den hier beschriebenen und dargestellten, idealen Ausgestaltungsmerkmalen ergeben können. Dies gilt vor allem für den Verlauf der Gewindekante 14 und/oder der Grenzlinien 26, der von der sinusartigen Darstellung abweichend auch z. B. mit etwa geradlinigen Abschnitten im Bereich der Wellentäler und/oder mit unregelmäßigem Verlauf entstehen kann. Ferner kann die Gewindekante 14 anstatt mit einer scharfen, messerschneidenartigen Spitze zwischen den Flanken auch mit einer schmalen Fläche oder mit einem kleinen Krümmungsradius gebildet sein.

## Patentansprüche

1. Schraube (1) mit einem Gewindeschaft (2) mit einem Kraftangriff (4) zur Drehmomentübertragung und einer Schraubenspitze (6), wobei der Gewindeschaft (2) aus einem Schaftkern (10) und einem selbst-gewindeformenden Gewinde (12) besteht und das Gewinde (12) als schraubenlinienförmig über den Schaftkern (10) verlaufende, von zwei in einer äußeren Gewindekante (14) zusammenlaufenden Flanken (15, 16) begrenzte Erhebung mit einer radial vom Schaftkern (10) bis zur Gewindekante (14) gemessenen Höhe (H) ausgebildet ist, wobei das Gewinde (12) im Profil gesehen an der Gewindekante (14) einen bestimmten, zwischen den angrenzenden Flanken (15,16) gebildeten Spitzenwinkel (α) aufweist, wobei wenigstens eine der beiden Flanken (15, 16) des Gewindes (12) im Bereich zwischen dem Schaftkern (10) und der Gewindekante (14) im radialen Profil gesehen derart konkav ausgebildet ist, dass der Spitzenwinkel (α) kleiner als ein zwischen gedachten, jeweils durch einen Gewindefußpunkt (GF) und die Gewindekante (14) bestimmten Flankengeraden (FG) eingeschlossener Flankenwinkel (α_{F}) ist, und wobei die/jede Flanke (15, 16) ausgehend vom Schäftkern (10) zunächst geradlinig entsprechend der durch den Gewindefußpunkt (GF) verlaufenden Flankengeraden (FG) und erst ab einer bestimmten Flankenhöhe (h_{F}) konkav verläuft.

2. Schraube nach Anspruch 1,
**dadurch gekennzeichnet, dass** beide Flanken (15, 16) -vorzugsweise gleichartig - konkav ausgebildet sind.

3. Schraube nach Anspruch 1 oder 2,
**dadurch gekennzeichnet, dass** die Flanken (15,16) in einem an die Gewindekante (14) angrenzenden Teilbereich im Profil gesehen im Wesentlichen geradlinig verlaufen.

4. Schraube nach einem der Ansprüche 1 bis 3,
**dadurch gekennzeichnet, dass** der Spitzenwinkel (α) etwa im Bereich von 25° bis 35° liegt.

5. Schraube nach einem der Ansprüche 1 bis 4,
**dadurch gekennzeichnet, dass** zumindest in einem Teilbereich des Gewindes (12) die äußere Gewindekante (14) in radialer Richtung mit einer Amplitude (U) wellenförmig zwischen Wellenbergen (20) mit der Gewinde-Höhe (H) und Wellentälern (22) mit einer um die Amplitude (U) reduzierten Höhe (h) verläuft und das Gewinde (12) zumindest im Bereich einer seiner Flanken (15/16) im Bereich der Wellentäler (22) der Gewindekante (14) die Oberfläche der Flanke (15/16) unterbrechende Einbuchtungen (24) aufweist, deren äußere Begrenzung die Gewindekante (14) ist, wobei das Gewinde (12) in den nicht von Einbuchtungen (24) unterbrochenen Bereichen der Wellenberge (20) der Gewindekante (14) jeweils den bestimmten, zwischen den Flanken (15/16) gebildeten ersten Spitzehwinkel (α) und in den tiefsten Bereich der Wellentäler (22) der Gewindekante (14) einen zweiten Spitzenwinkel (α) aufweist.

6. Schraube nach Anspruch 5,
**dadurch gekennzeichnet, dass** die Einbuchtungen (24) im Profil des Gewindes (12) in radialer Richtung gesehen im Wesentlichen geradlinig verlaufende Oberflächen aufweisen, wobei der zweite Spitzenwinkel (α') größer als der erste Spitzenwinkel (α) ist und insbesondere etwa im Bereich von 30° bis maximal 58° liegt.

7. Schraube nach Anspruch 5,
**dadurch gekennzeichnet, dass** die Einbuchtungen (24) im Profil gesehen zumindest abschnittsweise konkave Oberflächen aufweisen, wobei der zweite Spitzenwinkel (α') etwa in der Größenordnung des ersten Spintzenwinkels (α) liegt.

8. Schraube nach einem der Ansprüche 5 bis 7,
**dadurch gekennzeichnet, dass** für eine Verwendung zum Einschrauben in weichere Materialien, wie Holz oder holzähnliche Werkstoffe, die Amplitude (U) der wellenförmigen Gewindekante (14) etwa das 0,2 bis 0,4-fache der Gewinde-Höhe (H) beträgt.

9. Schraube nach einem der Ansprüche 5 bis 7,
**dadurch gekennzeichnet, dass** für eine Verwendung zum Einschrauben in härtere bzw. widerstandsfähigere Materialien, insbesondere Kunststoffe oder Metalle, die Amplitude (U) der wellenförmigen Gewindekante (14) etwa das 0,05-bis 0,15- fache der Gewinde-Höhe (H) beträgt.

10. Schraube nach einem der Ansprüche 5 bis 7,
**dadurch gekennzeichnet, dass** für eine universelle Verwendung zum Einschrauben in unterschiedliche Materialien die Amplitude (U) der wellenförmigen Gewindekante (14) etwa das 0,1- bis 0,3-fache der GewindeHöhe (H) beträgt.

11. Schraube nach einem der Ansprüche 5 bis 10,
**dadurch gekennzeichnet, das**s die Einbuchtungen (24) jeweils eine ausgehend von einem von den Wellenbergen (20) der Gewindekante (14) bestimmten Durchmesser (D) in radialer Richtung nach innen gemessene Tiefe (Z) aufweisen, die kleiner/gleich der Höhe (H) des Gewindes (12) ist.

12. Schraube nach Anspruch 11,
**dadurch gekennzeichnet, dass** für eine Verwendung zum Einschrauben in weichere Materialien, wie Holz oder holzähnliche Werkstoffe, die radiale Tiefe (Z) der Einbuchtungen (24) etwa das 0,8- bis 1-fache der Gewinde-Höhe (H) beträgt.

13. Schraube nach Anspruch 11,
**dadurch gekennzeichnet, dass** für eine Verwendung zum Einschrauben in härtere bzw. widerstandsfähigere Materialien, insbesondere Kunststoffe oder Metalle, die radiale Tiefe (Z) der Einbuchtungen (24) etwa das 0,2 bis 0,3-fache der Gewinde-Höhe (H) beträgt.

14. Schraube nach Anspruch 11,
**dadurch gekennzeichnet,dass** für eine universelle Verwendung zum Einschrauben in unterschiedliche Materialien die radiale Tiefe (Z) der Einbuchtungen (24) etwa das 0,3- bis 0,8-fache der Gewinde-Höhe (H) beträgt.

15. Schraube nach einem der Ansprüche 5 bis 14,
**dadurch gekennzeichnet, dass** die Wellenberge (20) in Umfangsrichtung jeweils um einen Teilungswinkel (δ) voneinander beabstandet sind, der für eine Verwerdung zum Einschrauben in weichere Materialien, wie Holz oder holzähnliche Werkstoffe, im Bereich von 30° bis 45° liegt.

16. Schraube nach einem der Ansprüche 5 bis 14,
**dadurch gekennzeichnet, dass** die Wellenberge (20) in Umfangsrichtung jeweils um einen Teilungswinkel (δ) voneinander beabstandet sind, der für eine Verwendung zum Einschrauben in härtere bzw. widerstandsfähigere Materialien, insbesondere Kunststoffe oder Metalle, im Bereich von 15° bis 24° liegt.

17. Schraube nach einer der Ansprüche 5 bis 14,
**dadurch gekennzeichnet, dass** die Wellenberge (20) in Umfangsrichtung jeweils um einen Teilungswinkel (δ) voneinander beabstandet, sind, der für eine Verwendung zum Einschrauben in unterschiedliche Materialien im Bereich von 20° bis 35° liegt.

18. Schraube nach einem der Ansprüche 5 bis 17,
**dadurch gekennzeichnet, dass** die Einbuchtungen (24) jeweils durch eine Grenzlinie (26) von der angrenzenden Fläche der Flanke (15, 16) begrenzt sind, wobei die Grenzlinie (26) im Wesentlichen die Form einer Parabel mit seitlichen, etwa V-förmigen Grenzabschnitten (28) hat, wobei im Bereich der Wellenberge (20) jeweils zwischen zwei benachbarten Einbuchtungen (24) ein bezüglich seiner Flanken (15, 16) ununterbrochener Gewindeabschnitt (30) gebilde ist und die beidseitig dieses Gewindeabschnitts (30) liegenden Grenzabschnitte (28) einen Winkel. (γ) einschießen, der im Bereich von 30° bis 90° liegt.

19. Schraube nach Anspruch 18,
**dadurch gekennzeichnet, dass** die Grenzabschnitte (28) im Bereich jedes Wellenberges (20) über eine Verrundung mit einem Radius (r) ineinander übergehen, der etwa dem 0,1- bis 0,3- fachen der Gewinde-Höhe (H) entspricht.

20. Schraube nach Anspruch 18 oder 19,
**dadurch gekennzeichnet, dass** jede Einbuchtung (24) derart symmetrisch ausgebildet ist, dass ihre Grenzabschnitte (28) in Ein- und Ausdrehrichtung (E/A) der Schraube jeweils im gleichen Winkel zu einer radialen Achse (31) der Einbuchtung (24) verläuft.

21. Schraube nach Anspruch 18 oder 19,
**dadurch gekenhzeichnet, dass** jede Einbuchtung (24) derart asymmetrisch ausgebildet ist, dass die in Eindrehrichtung (E) vordere Grenzlinie (28) steiler als die hintere Grenzlinie (28) wobei eine Achse (32) der Einbuchtung (24) zu einer radialen Mittellinie (34) des Wellentales (22) der Gewindekante (14) um einen spitzen Winkel (β) in Eindrehrichtung (E) versetzt ist, wobei dieser Winkel (β) vorzugsweise etwa in der Größenordnung von 10° bis 25° liegt.

22. Schraube nach einem der Ansprüche 5 bis 21,
**dadurch gekennzeichnet, dass** das Gewinde (12) bis zum spitzen Ende (18) der Schraubenspitze (6) verläuft, wobei das Gewinde (12) ausgehend von der Schraubenspitze (6) mindestens über den ersten sich anschließenden Gewindegang mit den Einbuchtungen (24) und der wellenförmigen Gewindekante (14) ausgeführt ist.

23. Schraube nach einem der Ansprüche 5 bis 22,
**dadurch gekennzeichnet, dass** die Einbuchtungen (24) auf beiden Flanken (15, 16) des Gewindes (12) einander gegenüberliegend ausgebildet sind.

24. Schraube nach einem der Ansprüche 5 bis 23,
**dadurch gekennzeichnet, dass** der Abstand der Einbuchtungen (24) im Bereich der Schraubenspitze (6) zu deren Ende (18) hin kleiner wird.

25. Schraube insbesondere nach einem der Ansprüche 1 bis 24,
**dadurch gekennzeichnet, dass** das eingängig ausgeführte. Gewinde (12) eine Steigung (S) aufweist, die etwa das 0,5- fache des äußeren Gewinde-Durchmessers (D) trägt.

26. Schraube nach'einem der Ansprüche 1 bis 25,
**dadurch gekennzeichnet, dass** die Schraubenspitze (6) mit selbst-vorlochenden Eigenschaften ausgebildet ist.

## Claims

1. A screw (1) with a threaded shank (2) with a force application point (4) for transmitting torque, and a screw tip (6), the threaded shank (2) consisting of a shank core (10) and an automatically thread-forming thread (12), and the thread (12) being formed as an elevation which extends helically over the shank core (10) and which is delimited by two flanks (15, 16) which converge in an outer thread edge (14), with a height (H) measured radially from the shank core (10) to the thread edge (14), the thread (12), as viewed in profile, having at the thread edge (14) a specific apex angle (α), formed between the adjoining flanks (15, 16), at least one of the two flanks (15, 16) of the thread (12) being formed concavely in the region between the shank core (10) and the thread edge (14), as viewed in radial profile, such that the apex angle (α) is smaller than a flank angle (α_{F}) enclosed between imaginary straight flank lines (FG) determined in each case by a thread root point (GF) and the thread edge (14), and the/each flank (15, 16), starting from the shank core (10), extending initially in a straight line corresponding to the straight flank line (FG) which extends through the thread root point (GF), and only extending concavely as from a specific flank height (h_{F}).

2. A screw according to Claim 1,
**characterised in that** both flanks (15, 16) are formed concavely, preferably similarly.

3. A screw according to Claim 1 or 2,
**characterised in that** the flanks (15, 16) extend substantially in a straight line, as viewed in profile, in a partial region adjoining the thread edge (14).

4. A screw according to one of Claims 1 to 3,
**characterised in that** the apex angle (α) lies approximately in the range from 25° to 35°.

5. A screw according to one of Claims 1 to 4,
**characterised in that** at least in a partial region of the thread (12) the outer thread edge (14) extends in the radial direction with an amplitude (U) in undulating manner between wave crests (20) with the thread height (H) and wave troughs (22) with a height (h) reduced by the amplitude (U), and the thread (12) has, at least in the region of one of its flanks (15/16), in the region of the wave troughs (22) of the thread edge (14) indentations (24) which interrupt the surface of the flank (15/16), the outer boundary of which indentations is the thread edge (14), the thread (12) having, in the regions of the wave crests (20) of the thread edge (14) which are not interrupted by indentations (24), in each case the specific first apex angle (α) formed between the flanks (15/16) and a second apex angle (α') in the lowest region of the wave troughs (22) of the thread edge (14).

6. A screw according to Claim 5,
**characterised in that** the indentations (24) have surfaces extending substantially in a straight line, as viewed in the radial direction, in the profile of the thread (12), the second apex angle (α') being greater than the first apex angle (α) and lying in particular approximately in the range from 30° to at most 58°.

7. A screw according to Claim 5,
**characterised in that** the indentations (24), as viewed in profile, have concave surfaces, at least in sections, the second apex angle (α') being approximately of the order of magnitude of the first apex angle (α).

8. A screw according to one of Claims 5 to 7,
**characterised in that** for use for screwing into softer materials, such as wood or wood-like materials, the amplitude (U) of the undulating thread edge (14) is approximately 0.2 to 0.4 times the thread height (H).

9. A screw according to one of Claims 5 to 7,
**characterised in that** for use for screwing into harder or more resistant materials, in particular plastics materials or metals, the amplitude (U) of the undulating thread edge (14) is approximately 0.05 to 0.15 times the thread height (H).

10. A screw according to one of Claims 5 to 7,
**characterised in that** for universal use for screwing into various materials, the amplitude (U) of the undulating thread edge (14) is approximately 0.1 to 0.3 times the thread height (H).

11. A screw according to one of Claims 5 to 10,
**characterised in that** the indentations (24) have in each case a depth (Z) which is measured in the radial direction inwards starting from a diameter (D) determined by the wave crests (20) of the thread edge (14), which depth is smaller than/equal to the height (H) of the thread (12).

12. A screw according to Claim 11,
**characterised in that** for use for screwing into softer materials, such as wood or wood-like materials, the radial depth (Z) of the indentations (24) is approximately 0.8 to 1 times the thread height (H).

13. A screw according to Claim 11,
**characterised in that** for use for screwing into harder or more resistant materials, in particular plastics materials or metals, the radial depth (Z) of the indentations (24) is approximately 0.2 to 0.3 times the thread height (H).

14. A screw according to Claim 11,
**characterised in that** for universal use for screwing into various materials, the radial depth (Z) of the indentations (24) is approximately 0.3 to 0.8 times the thread height (H).

15. A screw according to one of Claims 5 to 14,
**characterised in that** the wave crests (20) in the peripheral direction are in each case spaced apart from each other by a pitch angle (δ) which for use for screwing into softer materials, such as wood or wood-like materials, lies in the range from 30° to 45°.

16. A screw according to one of Claims 5 to 14,
**characterised in that** the wave crests (20) in the peripheral direction are in each case spaced apart from each other by a pitch angle (δ) which for use for screwing into harder or more resistant materials, in particular plastics materials or metals, lies in the range from 15° to 24°.

17. A screw according to one of Claims 5 to 14,
**characterised in that** the wave crests (20) in the peripheral direction are in each case spaced apart from each other by a pitch angle (δ) which for use for screwing into various materials lies in the range from 20° to 35°.

18. A screw according to one of Claims 5 to 17,
**characterised in that** the indentations (24) in each case are delimited by a limiting line (26) from the adjoining surface of the flank (15, 16), the limiting line (26) having substantially the form of a parabola with lateral, approximately V-shaped, limiting sections (28), with in the region of the wave crests (20) a thread section (30) which is uninterrupted with respect to its flanks (15, 16) being formed in each case between two adjacent indentations (24) and the limiting sections (28) located on both sides of this thread section (30) enclosing an angle (γ) which is in the range from 30° to 90°.

19. A screw according to Claim 18,
**characterised in that** the limiting sections (28) in the region of each wave crest (20) merge into one another via a rounded section with a radius (r) which corresponds to approximately 0.1 to 0.3 times the thread height (H).

20. A screw according to Claim 18 or 19,
**characterised in that** each indentation (24) is formed symmetrically such that its limiting sections (28) in the screwing-in and unscrewing direction (E/A) of the screw in each case extends [sic] at the same angle to a radial axis (31) of the indentation (24).

21. A screw according to Claim 18 or 19,
**characterised in that** each indentation (24) is formed asymmetrically such that the front limiting line (28) in the screwing-in direction (E) extends more steeply than the rear limiting line (28), with an axis (32) of the indentation (24) being offset relative to a radial centre line (34) of the wave trough (22) of the thread edge (14) by an acute angle (β) in the screwing-in direction (E), this angle (β) being preferably approximately of the order of magnitude of 10° to 25°.

22. A screw according to one of Claims 5 to 21,
**characterised in that** the thread (12) extends as far as the sharp end (18) of the screw tip (6), the thread (12), starting from the screw tip (6), being embodied with the indentations (24) and the undulating thread edge (14) at least over the first adjoining turn of the thread.

23. A screw according to one of Claims 5 to 22,
**characterised in that** the indentations (24) are formed on both flanks (15, 16) of the thread (12), lying opposite one another.

24. A screw according to one of Claims 5 to 23,
**characterised in that** the distance between the indentations (24) in the region of the screw tip (6) becomes smaller towards the end (18) thereof.

25. A screw in particular according to one of Claims 1 to 24,
**characterised in that** the single-flight thread (12) has a pitch (S) which is approximately 0.5 times the outer thread diameter (D).

26. A screw according to one of Claims 1 to 25,
**characterised in that** the screw tip (6) is formed with automatically initial piercing properties.

## Revendications

1. Vis (1) avec une tige filetée (2) présentant un point d'application d'une force (4) pour la transmission de couple et une pointe de vis (6), dans laquelle la tige filetée (2) se compose d'un noyau de tige (10) et d'un filetage (12) autotaraudant et dans laquelle le filetage (12) est réalisé sous la forme d'une élévation s'étendant en hélice sur le noyau de tige (10), délimitée par deux flancs (15, 16) convergeant en une arête filetée extérieure (14) avec une hauteur (H) mesurée radialement du noyau de tige (10) à l'arête filetée (14), dans laquelle le filetage (12) présente, vu en profilé sur l'arête filetée (14), un angle de pointe (α) formé entre les flancs contigus (15, 16), dans laquelle au moins l'un des deux flancs (15, 16) du filetage (12) est réalisé concave dans la zone entre le noyau de tige (10) et l'arête filetée (14) vu en profilé radial de telle manière que l'angle de pointe (α) soit inférieur à un angle de flanc (α_{F}) formé entre des droites de flanc (FG) imaginaires, déterminées respectivement par un point de pied fileté (GF) et l'arête filetée (14), et dans laquelle le/chaque flanc (15, 16) s'étend en partant du noyau de tige (10) tout d'abord en ligne droite selon les droites de flanc (FG) s'étendant par le point de pied fileté (GF) puis de manière concave à partir d'une hauteur de flanc (h_{F}) déterminée.

2. Vis selon la revendication 1,
**caractérisée en ce que** les deux flancs (15, 16) sont réalisés de manière concave, de préférence de manière identique.

3. Vis selon la revendication 1 ou 2,
**caractérisée en ce que** les flancs (15, 16) s'étendent sensiblement en ligne droite dans une zone partielle contiguë à l'arête filetée (14) vu en profilé.

4. Vis selon l'une quelconque des revendications 1 à 3,
**caractérisée en ce que** l'angle de pointe (α) est compris approximativement entre 25° et 35°.

5. Vis selon l'une quelconque des revendications 1 à 4,
**caractérisée en ce qu'**au moins dans une zone partielle du filetage (12), l'arête filetée (14) extérieure s'étend dans le sens radial avec une amplitude (U) de manière ondulée entre des sommets (20) avec la hauteur de filetage (H) et des creux (22) avec une hauteur (h) réduite de l'amplitude (U) et le filetage (12) présente au moins dans la zone de l'un de ses flancs (15/16) dans la zone des creux (22) de l'arête filetée (14) des enfoncements (24) interrompant la surface des flancs (15/16), dont la délimitation extérieure est l'arête filetée (14), dans laquelle le filetage (12) présente, dans les zones non interrompues par des enfoncements (24) des sommets (20) de l'arête filetée (14), respectivement le premier angle de pointe (α) déterminé, formé entre les flancs (15/16) et dans la zone la plus basse des creux (22) de l'arête filetée (14), un second angle de pointe (α').

6. Vis selon la revendication 5,
**caractérisée en ce que** les enfoncements (24) présentent, vu dans le profilé du filetage (12) dans le sens radial, des surfaces s'étendant sensiblement en ligne droite, dans laquelle le second angle de pointe (α') est supérieur au premier angle de pointe (α) et est compris en particulier approximativement entre 30° et 58° au maximum.

7. Vis selon la revendication 5,
**caractérisée en ce que** les enfoncements (24) présentent, vu en profilé, des surfaces au moins par sections concaves, dans laquelle le second angle de pointe (α') présente approximativement l'ordre de grandeur du premier angle de pointe (α).

8. Vis selon l'une quelconque des revendications 5 à 7,
**caractérisée en ce que** l'amplitude (U) de l'arête filetée (14) ondulée s'élève approximativement à 0,2 à 0,4 fois la hauteur du filetage (H) pour une utilisation de vissage dans des matériaux plus mous tels que du bois ou des matériaux de type bois.

9. Vis selon l'une quelconque des revendications 5 à 7,
**caractérisée en ce que** l'amplitude (U) de l'arête filetée (14) ondulée s'élève approximativement à 0,05 à 0,15 fois la hauteur du filetage (H) pour une utilisation de vissage dans des matériaux plus durs ou plus résistants en particulier des plastiques ou métaux.

10. Vis selon l'une quelconque des revendications 5 à 7,
**caractérisée en ce que** l'amplitude (U) de l'arête filetée (14) ondulée s'élève approximativement à 0,1 à 0,3 fois la hauteur du filetage (H) pour une utilisation universelle de vissage dans des matériaux différents.

11. Vis selon l'une quelconque des revendications 5 à 10,
**caractérisée en ce que** les enfoncements (24) présentent une profondeur (Z) mesurée à partir d'un diamètre (D) déterminé par les sommets (20) de l'arête filetée (14) vers l'intérieur dans le sens radial, qui est inférieure/égale à la hauteur (H) du filetage (12).

12. Vis selon la revendication 11,
**caractérisée en ce que** la profondeur radiale (Z) des enfoncements (24) s'élève approximativement à 0,8 à 1 fois la hauteur du filetage (H) pour une utilisation de vissage dans des matériaux plus mous tels que du bois ou des matériaux de type bois.

13. Vis selon la revendication 11,
**caractérisée en ce que** la profondeur radiale (Z) des enfoncements (24) s'élève approximativement à 0,2 à 0,3 fois la hauteur du filetage (H) pour une utilisation de vissage dans des matériaux plus durs ou plus résistants, en particulier des plastiques ou métaux.

14. Vis selon la revendication 11,
**caractérisée en ce que** la profondeur radiale (Z) des enfoncements (24) s'élève approximativement à 0,3 à 0,8 fois la hauteur du filetage (H) pour une utilisation universelle de vissage dans des matériaux différents.

15. Vis selon l'une quelconque des revendications 5 à 14,
**caractérisée en ce que** les sommets (20) sont espacés les uns des autres dans le sens périphérique respectivement d'un pas angulaire (δ) qui est compris entre 30° et 45° pour une utilisation de vissage dans des matériaux plus mous tels que du bois ou matériaux de type bois.

16. Vis selon l'une quelconque des revendications 5 à 14,
**caractérisée en ce que** les sommets (20) sont espacés les uns des autres dans le sens périphérique respectivement d'un pas angulaire (δ) qui est compris entre 15° et 24° pour une utilisation de vissage dans des matériaux plus durs ou plus résistants, en particulier des plastiques ou métaux.

17. Vis selon l'une quelconque des revendications 5 à 14,
**caractérisée en ce que** les sommets (20) sont espacés les uns des autres dans le sens périphérique respectivement d'un pas angulaire (δ) qui est compris entre 20° et 35° pour une utilisation de vissage dans des matériaux différents.

18. Vis selon l'une quelconque des revendications 5 à 17,
**caractérisée en ce que** les enfoncements (24) sont délimités respectivement par une ligne limite (26) de la surface contiguë du flanc (15, 16), dans laquelle la ligne limite (26) présente sensiblement la forme d'une parabole avec des sections limites (28) latérales, à peu près en forme de V, dans laquelle une section de filetage (30) ininterrompue par rapport à ses flancs (15, 16) est formée dans la zone des sommets (20) respectivement entre deux enfoncements (24) contigus et les sections limites (28) se trouvant de part et d'autre de cette section de filetage (30) forment un angle (γ) compris entre 30° et 90°.

19. Vis selon la revendication 18,
**caractérisée en ce que** les sections limites (28) dans la zone de chaque sommet (20) passent les unes dans les autres par un arrondissement avec un rayon (r) qui correspond approximativement à 0,1 à 0,3 fois la hauteur de filetage (H).

20. Vis selon la revendication 18 ou 19,
**caractérisée en ce que** chaque enfoncement (24) est réalisé de manière symétrique de telle manière que ses sections limites (28) s'étendent dans le sens de vissage et de dévissage (E/A) de la vis respectivement dans le même angle par rapport à un axe radial (31) de l'enfoncement (24).

21. Vis selon la revendication 18 ou 19,
**caractérisée en ce que** chaque enfoncement (24) est réalisé de manière asymétrique de telle manière que la ligne limite (28) avant dans le sens de vissage (E) s'étende avec une plus grande pente que la ligne limite arrière (28), dans laquelle un axe (32) de l'enfoncement (24) est décalé par rapport à une ligne médiane radiale (34) du creux (22) de l'arête filetée (14) d'un angle aigu (β) dans le sens de vissage (E), dans lequel cet angle (β) est compris de préférence approximativement entre 10° et 25°.

22. Vis selon l'une quelconque des revendications 5 à 21,
**caractérisée en ce que** le filetage (12) s'étend jusqu'à l'extrémité pointue (18) de la pointe de vis (6), dans laquelle le filetage (12) est réalisé à partir de la pointe de vis (6) au moins sur le premier pas contigu avec les enfoncements (24) et l'arête filetée (14) ondulée.

23. Vis selon l'une quelconque des revendications 5 à 22,
**caractérisée en ce que** les enfoncements (24) sont réalisés à l'opposé sur les deux flancs (15, 16) du filetage (12).

24. Vis selon l'une quelconque des revendications 5 à 23,
**caractérisée en ce que** la distance entre les enfoncements (24) est plus petite dans la zone de la pointe de vis (6) vers son extrémité (18).

25. Vis selon l'une quelconque des revendications 1 à 24,
**caractérisée en ce que** le filetage (12) réalisé avec un seul filet présente un pas (S) qui porte approximativement 0,5 fois le diamètre de filetage extérieur (D).

26. Vis selon l'une quelconque des revendications 1 à 25,
**caractérisée en ce que** la pointe de vis (6) est réalisée avec des propriétés autoprépoinçonnantes.
